# EUROPEAN PATENT APPLICATION

(11) **EP 4 471 587 A1**
(43) Date of publication of application: **04.12.2024**
(21) Application number: 23795262.7
(22) Date of filing: 23.04.2023
(51) Int. Cl.: G06F 9/455, G06F 9/50

(54) **DEVICE VIRTUALIZATION METHOD AND RELATED DEVICE**

(30) Priority: 24.04.2022 CN 202210454774
(71) Applicant: Huawei Technologies Co., Ltd., Shenzhen, Guangdong 518129 (CN)
(72) Inventor: LU, Lina, Shenzhen, Guangdong 518129 (CN); XIE, Yingtai, Shenzhen, Guangdong 518129 (CN); XU, Xiaoyang, Shenzhen, Guangdong 518129 (CN)
(74) Representative: Pfenning, Meinig & Partner mbB
(86) International application number: PCT/CN2023/090008
(87) International publication number: WO 2023/207829

(57) **Abstract**

Embodiments of this application disclose a device virtualization method. The method is applied to an accelerated computing system. The accelerated computing system includes a host end and a device end connected to the host end. The method may be performed by the device end, or may be performed by a component of the device end (for example, a software configuration module in the device end). The method includes: receiving a management command from the host end, where the management command is used to virtualize a physical resource in the device end to provide a virtual function to the host end for use, and the physical resource is used to perform an accelerated computing task; and configuring a register based on the management command, where the register is configured to virtualize the physical resource. Compared with a conventional technology in which a configuration of each GPU instance is fixed, in embodiments of this application, the device end may flexibly configure the virtual function by using the management command and the register, to implement a resource needed by the accelerated computing task.

## Description

This application claims priority to Chinese Patent Application No. 202210454774.6, filed with the China National Intellectual Property Administration on April 24, 2022 and entitled "DEVICE VIRTUALIZATION METHOD AND RELATED DEVICE", which is incorporated herein by reference in its entirety.

### TECHNICAL FIELD

Embodiments of this application relate to the field of virtualization technologies, and in particular, to a device virtualization method and a related device.

### BACKGROUND

With rapid development of processor technologies and virtualization technologies in recent years, various types of XPU accelerators in diversified computing power scenarios play an important role. A graphics processing unit (graphics processing unit, GPU) is used to accelerate 2D/3D rendering in the graphics field, a neural network processing unit (neural network processing unit, NPU) is used to accelerate neural network computing in the artificial intelligence field, a data processing unit (data processing unit, DPU) is used to process large-scale data in data centers, and a tensor processing unit (tensor processing unit, TPU) is used to accelerate a matrix operation of a neural network. When the XPU accelerators are used in public cloud and data center scenarios, virtualization technologies are used to isolate a plurality of tenants when the accelerators are used by virtual machines or containers, to achieve the purpose of reducing large-scale deployment costs and enhancing competitiveness.

Currently, XPU virtualization technologies generally use a virtualization solution based on a multi-instance graphics processing unit (multi-instance graphics processing unit, MIG). This solution supports provision of up to seven times as many GPU instances without increasing costs. Each instance is completely isolated from a video memory, a cache, and a computing core of the instance.

However, in the foregoing solution, each GPU instance is a segment obtained by independently dividing a hardware resource, and a configuration of the GPU instance is fixed. Consequently, the GPU instance cannot be flexibly applied to various scenarios.

### SUMMARY

Embodiments of this application provide a device virtualization method and a related device. A device end may flexibly configure a virtual function by using a management command and a register, to implement a resource needed by an accelerated computing task.

A first aspect of embodiments of this application provides a device virtualization method. The method is applied to an accelerated computing system. The accelerated computing system includes a host end and a device end connected to the host end. The method may be performed by the device end, or may be performed by a component (for example, a software configuration module in the device end) of the device end. The method includes: receiving a management command from the host end, where the management command is used to virtualize a physical resource in the device end to provide a virtual function to the host end for use, and the physical resource is used to perform an accelerated computing task; and configuring a register in the device end based on the management command, where the register is configured to virtualize the physical resource, for example, configured to configure a physical resource corresponding to a virtual resource or configured to configure a mapping relationship between the physical resource and a virtual resource. Optionally, the register may be randomly configured by using the software configuration module.

In this embodiment of this application, in an accelerated computing scenario, the device end may flexibly configure the virtual function by using the management command and the register, to implement a resource needed by the accelerated computing task. Compared with a conventional technology in which a configuration of each GPU instance is fixed due to hardware, the register may flexibly virtualize the physical resource, for example, flexibly configure the mapping relationship between the physical resource and the virtual resource or flexibly configure the virtual function.

Optionally, in a possible implementation of the first aspect, the foregoing step further includes: The device end transmits the accelerated computing task to the host end by using a queue of the virtual function, where the accelerated computing task is performed by an accelerator that corresponds to the accelerated computing task and that is in the device end, the queue is virtually presented by the device end to the host end, and the accelerated computing task is stored in a memory in the device end. Further, the device end may further transmit indication information to the host end by using the queue, where the indication information indicates whether the device end completes the accelerated computing task, and the indication information is also stored in the memory in the device end.

In this possible implementation, a processor in the device end does not need to participate in data plane transmission, the queue is in the memory in the device end, and the memory may be mapped to the virtual function for use. The device end may directly access the accelerated computing task in the queue, and the device end does not need to initiate a direct memory access (direct memory access, DMA) operation to obtain the accelerated computing task. To be specific, the data plane transmission does not need a DMA queue, and uses pure hardware (for example, a hardware scheduling apparatus and an accelerator, where the hardware scheduling apparatus is configured to schedule the queue, and the accelerator is configured to, in response to scheduling of the hardware scheduling apparatus, perform a corresponding accelerated computing task), so that efficiency of processing the accelerated computing task by the device end can be improved.

A second aspect of embodiments of this application provides a device virtualization method. The method is applied to an accelerated computing system. The accelerated computing system includes a host end and a device end connected to the host end. The method may be performed by the host end, or may be performed by a component of the host end. The method includes: obtaining a management command, where the management command is used to virtualize a physical resource in the device end to provide a virtual function to the host end for use, and the physical resource is used to perform an accelerated computing task; and sending the management command to the device end, so that the device end configures a register by using the management command, where the register is configured to virtualize the physical resource, for example, configured to configure a physical resource corresponding to a virtual resource or configured to configure a mapping relationship between the physical resource and a virtual resource.

In this embodiment of this application, in an accelerated computing system scenario, the host end may deliver the management command to the device end, so that the device end flexibly configures the virtual function by using the management command and the register, to implement a resource needed by the accelerated computing task. Compared with a conventional technology in which a configuration of each GPU instance is fixed due to hardware, the register may flexibly virtualize the physical resource, to flexibly configure the virtual function.

Optionally, in a possible implementation of the second aspect, the foregoing step further includes: The host end transmits the accelerated computing task to the device end by using a queue of the virtual function, where the accelerated computing task is performed by an accelerator that corresponds to the accelerated computing task and that is in the device end, and the accelerated computing task is stored in a memory in the device end. Further, the host end may further transmit indication information to the device end by using the queue, where the indication information indicates whether the device end completes the accelerated computing task, and the indication information is also stored in the memory in the device end.

In this possible implementation, a processor in the device end does not need to participate in data plane transmission, the queue is in the memory in the device end, and the memory may be mapped to the virtual function for use. The device end may directly access the accelerated computing task in the queue, and the device end does not need to initiate a DMA operation to obtain the accelerated computing task. To be specific, the data plane transmission does not need a DMA queue, and uses pure hardware (for example, a hardware scheduling apparatus and an accelerator, where the hardware scheduling apparatus is configured to schedule the queue, and the accelerator is configured to, in response to scheduling of the hardware scheduling apparatus, perform a corresponding accelerated computing task), so that efficiency of processing the accelerated computing task by the device end can be improved.

A third aspect of embodiments of this application provides a device virtualization method. The method is applied to an accelerated computing system. The accelerated computing system includes a host end and a device end connected to the host end. The method may be performed by the device end, or may be performed by a component (for example, a virtual function presentation apparatus or a hardware scheduler in the device end) of the device end. The method includes: transmitting an accelerated computing task to the host end by using a queue of a virtual function presented by the device end on the host end, where the accelerated computing task is performed by an accelerator that corresponds to the accelerated computing task and that is in the device end, the queue is virtually presented by the device end to the host end, and the accelerated computing task is stored in a memory in the device end. Further, the device end may further transmit indication information to the host end by using the queue, where the indication information indicates whether the device end completes the accelerated computing task, and the indication information is also stored in the memory in the device end.

In this embodiment of this application, a processor in the device end does not need to participate in data plane transmission. To be specific, the accelerated computing task and the indication information are stored in the memory in the device end, or the queue is in the memory in the device end, and the memory may be mapped to the virtual function for use. The device end may directly access the accelerated computing task in the queue, and the device end does not need to initiate a direct memory access (direct memory access, DMA) operation to obtain the accelerated computing task. To be specific, the data plane transmission does not need a DMA queue, and uses pure hardware (for example, a hardware scheduling apparatus and an accelerator, where the hardware scheduling apparatus is configured to schedule the queue, and the accelerator is configured to, in response to scheduling of the hardware scheduling apparatus, perform a corresponding accelerated computing task), so that efficiency of processing the accelerated computing task by the device end can be improved.

Optionally, in a possible implementation of the third aspect, the foregoing step further includes: The device end delivers the accelerated computing task to the accelerator based on the virtual function to which the queue belongs, where an accelerator group is configured to complete the accelerated computing task, and data generated by the accelerator in computing the accelerated computing task is stored in the memory in the device end.

In this possible implementation, the device end delivers, based on the virtual function to which a request queue belongs, the accelerated computing task to an accelerator corresponding to the virtual function, so that request queues of different virtual functions can be isolated from each other, thereby improving security.

A fourth aspect of embodiments of this application provides a device virtualization method. The method is applied to an accelerated computing system. The accelerated computing system includes a host end and a device end connected to the host end. The method may be performed by the host end, or may be performed by a component of the host end. The method includes: obtaining an accelerated computing task; and transmitting the accelerated computing task to the device end by using a queue of a virtual function presented by the device end on the host end, where the accelerated computing task is performed by an accelerator that corresponds to the accelerated computing task and that is in the device end, the queue is virtually presented by the device end to the host end, and the accelerated computing task is stored in a memory in the device end. Further, the host end may further transmit indication information to the device end by using the queue, where the indication information indicates whether the device end completes the accelerated computing task, and the indication information is also stored in the memory in the device end.

In this embodiment of this application, a processor in the device end does not need to participate in data plane transmission. To be specific, the queue is in the memory in the device end, and may be used by the virtual function. The device end may directly access the accelerated computing task in the queue, and the device end does not need to initiate a DMA operation to obtain the accelerated computing task. To be specific, the data plane transmission does not need a DMA queue, and uses pure hardware (for example, a hardware scheduling apparatus and an accelerator, where the hardware scheduling apparatus is configured to schedule the queue, and the accelerator is configured to, in response to scheduling of the hardware scheduling apparatus, perform a corresponding accelerated computing task), so that efficiency of processing the accelerated computing task by the device end can be improved.

A fifth aspect of embodiments of this application provides a device end, where the device end is applied to an accelerated computing system. The accelerated computing system includes a host end and the device end connected to the host end. The device end includes: a receiving unit, configured to receive a management command from the host end, where the management command virtualizes a physical resource in the device end to provide a virtual function to the host end for use, and the physical resource is used to perform an accelerated computing task; and a configuration unit, configured to configure a register based on the management command, where the register is configured to virtualize the physical resource.

A sixth aspect of embodiments of this application provides a host end, where the host end is applied to an accelerated computing system. The accelerated computing system includes the host end and a device end connected to the host end. The host end includes: an obtaining unit, configured to obtain a management command, where the management command is used to virtualize a physical resource in the device end to provide a virtual function to the host end for use, and the physical resource is used to perform an accelerated computing task; and a sending unit, configured to send the management command to the device end, so that the device end configures a register by using the management command, where the register is configured to virtualize the physical resource.

A seventh aspect of embodiments of this application provides a device end, where the device end is applied to an accelerated computing system. The accelerated computing system includes a host end and the device end connected to the host end. The device end includes: a transmission unit, configured to transmit an accelerated computing task to the host end by using a queue of a virtual function presented by the device end on the host end, where the accelerated computing task is performed by an accelerator that corresponds to the accelerated computing task and that is in the device end, the queue is virtually presented by the device end to the host end, and the accelerated computing task is stored in a memory in the device end.

An eighth aspect of embodiments of this application provides a host end, where the host end is applied to an accelerated computing system. The accelerated computing system includes the host end and a device end connected to the host end. The host end includes: an obtaining unit, configured to obtain an accelerated computing task; and a transmission unit, configured to transmit the accelerated computing task to the device end by using a queue of a virtual function presented by the device end on the host end, where the accelerated computing task is performed by an accelerator that corresponds to the accelerated computing task and that is in the device end, the queue is virtually presented by the device end to the host end, and the accelerated computing task is stored in a memory in the device end.

Optionally, in a possible implementation of any one of the first aspect to the eighth aspect, the queue includes a request queue and a response queue. The request queue is a queue used by the host end to send an accelerated computing task to the device end. The response queue is a queue used by the device end to send indication information to the host end. The indication information indicates whether the device end completes the accelerated computing task. The request queue is used by the device end to deliver, based on a virtual function to which the request queue belongs, the accelerated computing task to an accelerator corresponding to the virtual function. The accelerator is configured to complete the accelerated computing task. Data generated by the accelerator in computing the accelerated computing task is stored in a memory in the device end.

In this possible implementation, a processor in the device end does not need to participate in data plane transmission, the queue is in the memory in the device end, and the memory may be mapped to the virtual function for use. The device end may directly access the accelerated computing task in the queue, and the device end does not need to initiate a DMA operation to obtain the accelerated computing task. This improves efficiency of processing the accelerated computing task by the device end. In addition, the device end delivers, based on the virtual function to which the request queue belongs, the accelerated computing task to the accelerator corresponding to the virtual function, so that request queues of different virtual functions can be isolated from each other, thereby improving security.

Optionally, in a possible implementation of any one of the first aspect to the eighth aspect, the foregoing step further includes: The device end and the host end transmit the management command by using a physical function presented by the device end on the host end.

In this possible implementation, the management command is transmitted by using the physical function presented by the device end on the host end. Generally, the physical function is used by an administrator, and the virtual function is used by a user. Therefore, the management command is transmitted by using the physical function, so that the transmission of the management command is more secure.

Optionally, in a possible implementation of any one of the first aspect to the eighth aspect, the accelerated computing task includes at least one of the following: a graphics accelerated computing task, a vector operation accelerated computing task, a matrix operation accelerated computing task, a data copy accelerated computing task, and a video encoding and decoding accelerated computing task. It may be understood that the device end includes at least one of the following: a graphics processing unit GPU, a neural network processing unit NPU, a data processing unit DPU, a tensor processing unit TPU, a digital signal processor (digital signal processor, DSP), an application-specific integrated circuit (application-specific integrated circuit, ASIC), a field programmable gate array (field programmable gate array, FPGA), and the like. Specifically, the accelerator in the device end may be at least one of the following: the GPU, the NPU, the DPU, the TPU, the digital signal processor (digital signal processor, DSP), the application-specific integrated circuit (application-specific integrated circuit, ASIC), the field programmable gate array (field programmable gate array, FPGA), and the like.

In this possible implementation, the method may be applied to various heterogeneous virtualization scenarios, including GPU virtualization, NPU virtualization, TPU virtualization, and the like. The virtual function is flexibly configured by using the management command and the register, to implement a resource needed by the accelerated computing task.

Optionally, in a possible implementation of any one of the first aspect to the eighth aspect, the register is configured to configure at least one of the following: a quantity of virtual functions; a mapping relationship between a virtual memory of the virtual function and a physical memory in the device end; a mapping relationship between the queue of the virtual function and a memory address in the device end, where the queue is virtually presented by the device end to the host end, the queue includes a request queue and a response queue, the request queue is used by the host end to transmit an accelerated computing task to the device end, the response queue is used by the device end to send indication information to the host end, and the indication information indicates whether the device end completes the accelerated computing task; quantities of accelerators of different types in an accelerator group of the virtual function; and a doorbell register or an interrupt register related to the queue, where the doorbell register is used by the host end to notify the device end that the accelerated computing task has been put into the request queue, and the interrupt register is used by the device end to notify the host end that the indication information has been put into the response queue.

In this possible implementation, the device end may flexibly configure at least one of a virtual function memory resource, a heterogeneous communication resource, and a heterogeneous computing power resource by using the management command and the register. For example, the size of the memory of the virtual function may alternatively be flexibly defined by mapping several scattered device memory segments to a virtual function. Compared with a conventional technology in which each slice in the MIG technology has a fixed memory size, this manner can be used to implement flexible configuration of a resource.

Optionally, in a possible implementation of any one of the first aspect to the eighth aspect, when there are a plurality of virtual functions, different virtual functions correspond to different resources. Alternatively, when there are a plurality of virtual functions, at least one of a memory, a memory in a queue, and an accelerator group that corresponds to different virtual functions is different.

In this possible implementation, different virtual functions have different resources, so that physical resources used by the different virtual functions are isolated, thereby improving security and flexible configuration of a resource.

Optionally, in a possible implementation of any one of the first aspect to the eighth aspect, the virtual function may be presented in a manner of mdev (mediated device), single-root input/output virtualization (single-root input/output virtualization, SR-IOV), scalable input/output virtualization (scalable input/output virtualization, SIOV), or the like. This is not specifically limited herein. For the mdev presentation manner, the virtual function may be referred to as an mdev device. For the SR-IOV presentation manner, the virtual function may be referred to as a VF device. For the SIOV presentation manner, the virtual function may be referred to as an SF device/ADI device.

In this possible implementation, a plurality of presentation manners of the virtual function may be applied, and a corresponding presentation manner may be set according to an actual requirement, so that the virtual function presented by the device end to the host end may be flexibly applied to a plurality of scenarios.

Optionally, in a possible implementation of any one of the first aspect to the eighth aspect, the accelerated computing system is a heterogeneous accelerated computing system, and the accelerated computing task is a heterogeneous accelerated computing task.

In this possible implementation, in a heterogeneous computing scenario, the device end may flexibly configure the virtual function by using the management command and the register, to implement a resource needed by the accelerated computing task.

A ninth aspect of embodiments of this application provides a device end including a processor. The processor is coupled to a memory, and the memory is configured to store a program or instructions. When the program or the instructions are executed by the processor, the device end is enabled to implement the method according to any one of the first aspect or the possible implementations of the first aspect.

A tenth aspect of embodiments of this application provides a host end including a processor. The processor is coupled to a memory, and the memory is configured to store a program or instructions. When the program or the instructions are executed by the processor, the host end is enabled to implement the method according to any one of the second aspect or the possible implementations of the second aspect.

An eleventh aspect of this application provides a device end including a hardware scheduling apparatus. The hardware scheduling apparatus is coupled to a memory, and the memory is configured to map a queue of a virtual function. The hardware scheduling apparatus is configured to schedule the queue, so that the device end implements the method according to any one of the third aspect or the possible implementations of the third aspect.

A twelfth aspect of embodiments of this application provides a host end including a processor. The processor is coupled to a memory, and the memory is configured to store a program or instructions. When the program or the instructions are executed by the processor, the host end is enabled to implement the method according to any one of the fourth aspect or the possible implementations of the fourth aspect.

A thirteenth aspect of this application provides an accelerated computing system, including the device end in the ninth aspect and the host end in the tenth aspect, or including the device end in the eleventh aspect and the host end in the twelfth aspect.

A fourteenth aspect of this application provides a computer-readable medium. The computer-readable medium stores a computer program or instructions. When the computer program or the instructions are run on a computer, the computer is enabled to perform the method according to any one of the first aspect or the possible implementations of the first aspect; the computer is enabled to perform the method according to any one of the second aspect or the possible implementations of the second aspect; the computer is enabled to perform the method according to any one of the third aspect or the possible implementations of the third aspect; or the computer is enabled to perform the method according to any one of the fourth aspect or the possible implementations of the fourth aspect.

A fifteenth aspect of this application provides a computer program product. When the computer program product is executed on a computer, the computer is enabled to perform the method according to any one of the first aspect or the possible implementations of the first aspect; the computer is enabled to perform the method according to any one of the second aspect or the possible implementations of the second aspect; the computer is enabled to perform the method according to any one of the third aspect or the possible implementations of the third aspect; or the computer is enabled to perform the method according to any one of the fourth aspect or the possible implementations of the fourth aspect.

For technical effects brought by any one of the fifth aspect, the ninth aspect, the thirteenth aspect, the fourteenth aspect, and the fifteenth aspect or the possible implementations thereof, refer to technical effects brought by the first aspect or the different possible implementations of the first aspect. Details are not described herein again.

For technical effects brought by any one of the sixth aspect, the tenth aspect, the thirteenth aspect, the fourteenth aspect, and the fifteenth aspect or the possible implementations thereof, refer to technical effects brought by the first aspect or the different possible implementations of the first aspect. Details are not described herein again.

For technical effects brought by any one of the seventh aspect, the eleventh aspect, the thirteenth aspect, the fourteenth aspect, and the fifteenth aspect or the possible implementations thereof, refer to technical effects brought by the first aspect or the different possible implementations of the first aspect. Details are not described herein again.

For technical effects brought by any one of the eighth aspect, the twelfth aspect, the thirteenth aspect, the fourteenth aspect, and the fifteenth aspect or the possible implementations thereof, refer to technical effects brought by the first aspect or the different possible implementations of the first aspect. Details are not described herein again.

It can be learned from the foregoing technical solutions that embodiments of this application have the following advantage. In the accelerated computing scenario, the device end may flexibly configure the virtual function by using the management command and the register, to implement a resource needed by the accelerated computing task. Compared with a conventional technology in which a configuration of each GPU instance is fixed due to hardware, the register may flexibly configure the mapping relationship between the physical resource and the virtual resource, to flexibly configure the virtual function.

### BRIEF DESCRIPTION OF DRAWINGS

FIG. 1 is a schematic diagram of a structure of an accelerated computing system architecture according to an embodiment of the present invention;
FIG. 2 is a schematic flowchart of a device virtualization method according to an embodiment of this application;
FIG. 3 is a schematic flowchart for configuring a memory resource according to an embodiment of this application;
FIG. 4 is a schematic flowchart for configuring a queue according to an embodiment of this application;
FIG. 5 is a schematic flowchart for configuring a computing power resource according to an embodiment of this application;
FIG. 6 is a schematic flowchart of data plane transmission according to an embodiment of this application;
FIG. 7 is another schematic flowchart of data plane transmission according to an embodiment of this application;
FIG. 8 is a schematic diagram of a structure of a device end according to an embodiment of this application;
FIG. 9 is a schematic diagram of a structure of a host end according to an embodiment of this application;
FIG. 10 is a schematic diagram of another structure of a device end according to an embodiment of this application;
FIG. 11 is a schematic diagram of another structure of a host end according to an embodiment of this application;
FIG. 12 is a schematic diagram of another structure of a device end according to an embodiment of this application;
FIG. 13 is a schematic diagram of another structure of a host end according to an embodiment of this application;
FIG. 14 is a schematic diagram of another structure of a device end according to an embodiment of this application; and
FIG. 15 is a schematic diagram of another structure of a host end according to an embodiment of this application.

### DESCRIPTION OF EMBODIMENTS

Embodiments of this application provide a device virtualization method and a related device. A device end may flexibly configure a virtual function by using a management command and a register, to implement a resource needed by an accelerated computing task.

In descriptions of this application, unless otherwise specified, "/" means "or". For example, A/B may indicate A or B. A term "and/or" in this specification describes only an association relationship between associated objects and indicates that there may be three relationships. For example, A and/or B may indicate the following three cases: Only A exists, both A and B exist, and only B exists. In addition, in the descriptions of this application, unless otherwise specified, "a plurality of means two or more than two. In addition, to clearly describe technical solutions in embodiments of this application, words such as "first" and "second" are used in embodiments of this application to distinguish between identical items or similar items that have basically the same functions or purposes. A person skilled in the art may understand that the words such as "first" and "second" do not limit a quantity and an execution sequence, and that the words such as "first" and "second" do not indicate a definite difference.

First, some terms in embodiments of this application are explained and described, to facilitate understanding of a person skilled in the art.

### 1. Heterogeneous computing

Heterogeneous computing means a computing manner in which computing units of different types of instruction sets and system architectures are used to form a system. Alternatively, it is understood that a system constructed by one or more general-purpose computing units and one or more dedicated computing units is a heterogeneous computing system, and collaborative computing performed by the one or more general-purpose computing units and the one or more dedicated computing units is referred to as heterogeneous computing. Common types of computing units include a coprocessor such as a central processing unit (central processing unit, CPU) or a GPU, a digital signal processor (digital signal processor, DSP), an application-specific integrated circuit (application-specific integrated circuit, ASIC), a field programmable gate array (field programmable gate array, FPGA), and the like. Common heterogeneous computing means collaborative computing performed by CPU+GPU or CPU+another device (such as the FPGA).

Heterogeneous computing may alternatively be understood as parallel computing performed on a heterogeneous computing system, and is a parallel and distributed computing technology that enables a parallelism type (code type) of a computing task to perfectly match a computing type (that is, a machine capability) effectively supported by a machine and that can make full use of various computing resources.

### 2. Graphics processing unit (graphics processing unit, GPU)

A processor of a graphics card is referred to as a GPU. Because the GPU has a high parallel structure, the GPU has higher efficiency in processing graphics data and complex algorithms than a central processing unit (central processing unit, CPU).

### 3. Virtualization

Virtualization means to virtualize a computer into a plurality of logical computers by using a virtualization technology.

### 4. Virtual machine and container

A virtual machine is an operating system that shares physical resources of a host. A container is an environment that runs an application without depending on an operating system. The container shares a kernel of the host and cannot be completely isolated as the virtual machine.

### 5. Presentation

In embodiments of this application, a device end presents a virtual resource of a virtual function on a host end. For example, the device end may be an accelerator card (for example, a PCIe accelerator card), and the host end is a server. PCIe may be plugged and unplugged in a server. In some cases, a PCIe network card may be understood as a part of the server. A physical accelerator card may display a plurality of logical accelerator cards on the server, and the server may use the plurality of logical accelerator cards to execute functions of the physical accelerator card.

### 6. Physical function, virtual function, physical resource, and virtual resource

A virtual function in embodiments of this application is an instance virtualized by a device end that supports virtualization. The virtual function is presented in a form of an independent device, and may share a same physical resource with another virtual function.

A physical function is a function for an administrator to configure a physical resource corresponding to a virtual resource of the virtual function (for example, the device end performs functions such as discovery, management, and processing). The physical function has full configuration resources, and may be used to configure or control the device end.

A physical resource is a hardware resource in a device segment. A virtual resource is a logical resource that is displayed to a user by mapping to the physical resource.

In other words, when the device end is the accelerator card, each of the physical function and the virtual function may be understood as a subset of functions of the accelerator card. For security purposes, the physical function is mainly used by the administrator, the virtual function is mainly used by the user, and a virtual machine/container in the host end is connected to at least one virtual function to implement virtualization of the device end.

The following uses several common technologies as examples to describe the physical function and the virtual function in embodiments of this application.

For example, a single-root I/O virtualization (Single-Root I/O Virtualization, SR-IOV) technology introduces two new types of functions: a physical function (Physical Function, PF) module and a virtual function (Virtual Function, VF) module. The PF module has all PCIe functions of the SR-IOV, and may configure and manage an SR-IOV function. The VF module has a lightweight PCIe function, and includes resources needed for data transmission and a few configuration resources. In this example, the virtual function may be referred to as a VF device.

For another example, a scalable input/output virtualization (scalable input/output virtualization, SIOV) technology mainly includes a device layer, a platform layer, and a software layer. The device layer proposes an interface concept of an assignable device interface (assignable device interface, ADI), which is similar to a VF in the SR-IOV In this example, the virtual function may be referred to as an SF device/ADI device.

For another example, for an mdev (mediated device) technology, a virtual function of the mdev is an mdev device, and a physical function of the mdev is similar to a physical device that can be managed in the host end.

### 7. Interrupt and polling

A processor may communicate with a peripheral in an interrupt or polling manner. An interrupt means a request event initiated by the peripheral to the processor. Polling means that the processor periodically sends a query to sequentially inquiry whether each peripheral needs to be served.

### 8. Cloud computing architecture

A cloud computing architecture may be described by using a three-layer SPI (SaaS, PaaS, and IaaS) model.

Software as a service (Software as a Service, SaaS) layer (S layer): The S layer is what a user sees and uses, for example, a web page, mobile phone software (application, APP), a report, and the like.

Platform as a service (Platform as a Service, PaaS) layer (P layer): The P layer can be understood as a platform layer, which is a background in a common sense.

Infrastructure as a service (Infrastructure as a Service, IaaS) layer (I layer): The I layer can be understood as an infrastructure layer, including various networks, servers, hosts, and storage devices.

One of key technological breakthroughs in centralizing hardware resources is the virtualization technology. Virtualization may improve resource utilization, make an operation more flexible, and simplify change management. A single physical server may have a plurality of virtual machines that provide separation and security protection. Each virtual machine runs as if the virtual machine were running on hardware of the virtual machine. A basic layer of cloud computing is formed by centrally managing hosts, providing external services through a virtualization layer by using a market-based mechanism, and using a profit model featuring usage-based billing. This is the IaaS, which forms the basic layer of cloud computing.

With rapid development of processor technologies and virtualization technologies in recent years, various types of XPU accelerators in diversified computing power scenarios play an important role. XPU virtualization technologies generally use a virtualization solution based on a multi-instance graphics processing unit (multi-instance graphics processing unit, MIG). This solution supports provision of up to seven times as many GPU instances without increasing costs. Each instance is completely isolated from a video memory, a cache, and a computing core of the instance.

However, in the foregoing solution, a configuration of each GPU instance is fixed, and cannot be flexibly applied to various scenarios.

To resolve the foregoing technical problem, embodiments of this application provide a device virtualization method. In an accelerated computing system, a device end may flexibly configure a virtual function by using a management command and a register, to implement a resource needed by an accelerated computing task.

Before the device virtualization method and a related device that are provided in embodiments of this application are described, a system architecture provided in embodiments of this application is first described.

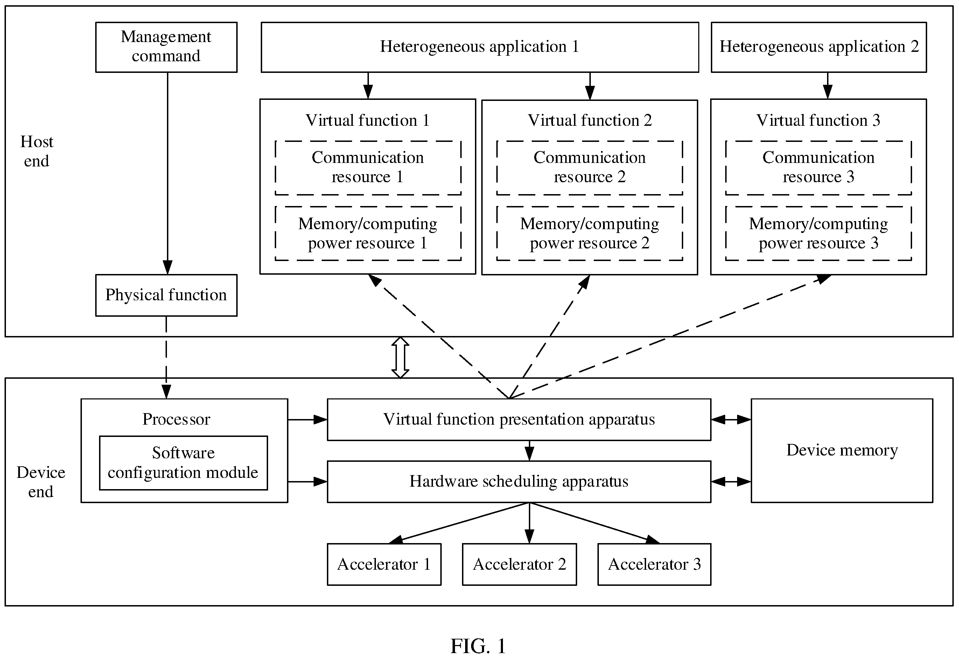

An accelerated computing system architecture provided in an embodiment of this application is shown in FIG. 1. The accelerated computing system architecture includes a host (Host) end and a device (Device) end. The host end and the device end may collaboratively perform a heterogeneous computing task.

In this embodiment of this application, an example in which the host end communicates with the device end only by using peripheral component interconnect express (peripheral component interconnect express, PCIe) is used for description. It may be understood that the host end may further communicate with the device end by using an NVIDIA link (NVIDIA link, NVLink) or the like. This is not specifically limited herein.

Optionally, an example in which the host end communicates with the device end through the PCIe is used. A host end in a heterogeneous accelerated computing system architecture may be understood as a device (for example, a server) compatible with the PCIe, and the device end may be understood as an accelerator card or a device in which an accelerator card is located that is inserted into the host end. The accelerator card herein may include different types of accelerators described subsequently.

The host end may run a heterogeneous application 1 and a heterogeneous application 2 directly, by using a container or a virtual machine, or the like. The heterogeneous application 1 uses a virtual function 1 and a virtual function 2. The heterogeneous application 2 uses a virtual function 3. Each virtual function includes a communication resource, a memory, and a computing power resource that are independent. To be specific, the virtual function 1 includes a communication resource 1 and a memory/computing power resource 1, the virtual function 2 includes a communication resource 2 and a memory/computing power resource 2, and the virtual function 3 includes a communication resource 3 and a memory/computing power resource 3. In addition, the communication resource 1, the communication resource 2, and the communication resource 3 are different, and the memory/computing power resource 1, the memory/computing power resource 2, and the memory/computing power resource 3 are different.

In addition, the host end may further run a management command. The management command is used to configure a quantity of virtual functions presented by the device end to the host end and a resource (for example, a communication resource, a memory resource, or a computing power resource) of the virtual function. A configuration channel may be completed by using a physical function provided by the device end to the host end. The physical function is a logical concept, and is a functional unit presented by the device end to the host end through the PCIe.

The management command may be used to configure a related register, and the register is configured to virtualize a physical resource of the device end. In this manner, the resource of the virtual function may be flexibly configured.

The device end includes a processor, a virtual function presentation apparatus, a hardware scheduling apparatus, an accelerator 1, an accelerator 2, an accelerator 3, and a device memory. The processor in the device end is configured to implement flexible configuration of the resource of the virtual function by loading code of a software configuration module. That is, the software configuration module is a functional unit that is in the device end and that is configured to configure the resource of the virtual function. The virtual function presentation apparatus is configured to present the virtual function to the host end. When the host end communicates with the device end through the PCIe, the virtual function presentation apparatus may be a customized PCIe controller or the like. The hardware scheduling apparatus is configured to: obtain an accelerated computing task from a queue of the virtual function, and deliver the accelerated computing task to an accelerator to implement an acceleration function of the accelerated computing task. Each accelerator is configured to accelerate a computing task (for example, a heterogeneous computing task). The device memory stores data and results needed for performing the computing task.

In this embodiment of this application, the virtual function may be presented in a manner of mdev (mediated device), single-root input/output virtualization (single-root input/output virtualization, SR-IOV), scalable input/output virtualization (scalable input/output virtualization, SIOV), or the like. This is not specifically limited herein. For the mdev presentation manner, the virtual function may be referred to as an mdev device. For the SR-IOV presentation manner, the virtual function may be referred to as a VF device. For the SIOV presentation manner, the virtual function may be referred to as an SF device/ADI device. For ease of description, in this embodiment of this application, an example in which the virtual function is presented in a manner of the SR-IOV and the virtual function is a VF device is only used for description.

In this embodiment of this application, a quantity of heterogeneous applications that are run on the host end, a quantity of virtual functions used by one heterogeneous application, and a quantity of accelerators in the device end may be greater or less than those in the system architecture shown in FIG. 1, and may be set according to an actual requirement. This is not specifically limited herein.

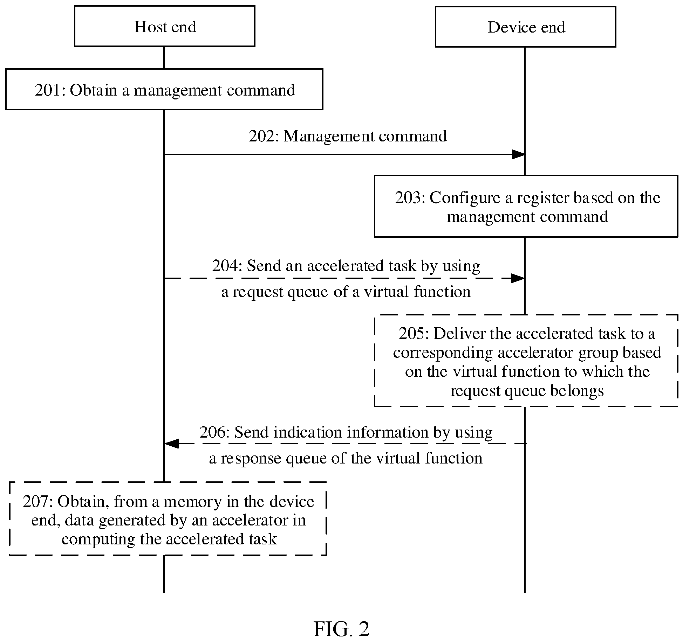

The following specifically describes the technical solutions provided in this application with reference to the system architecture in FIG. 1. FIG. 2 is a schematic flowchart of a device virtualization method according to an embodiment of this application. The device virtualization method may be applied to a virtualization scenario, including XPU virtualization, which may be specifically at least one of the following: GPU virtualization, NPU virtualization, DPU virtualization, TPU virtualization, and the like (or this is understood as that a device end includes at least one of a GPU, an NPU, a DPU, a TPU, and the like). The device virtualization method is mainly used to virtualize one device end into a plurality of virtual devices, and supports flexible division of resources such as a computing power and a memory in the device end. The method may include step 201 to step 207. The following describes step 201 to step 207 in detail.

Step 201: A host end obtains a management command.

In this embodiment of this application, the host end may obtain the management command in a plurality of manners, for example, in a manner of performing a user operation, in a manner of receiving a management command sent by another device, or in a manner of selecting a management command from a database. This is not specifically limited herein.

The management command is used to virtualize a physical resource in the device end to provide a virtual function to the host end for use, or this is understood as that the management command is used to configure a physical resource that corresponds to a virtual resource of the virtual function and that is in the device end. The virtual function is presented by the device end to the host end. The resource is used by the device end to perform an accelerated computing task. The resource may include at least one of the following: a quantity of virtual functions, a communication resource of the virtual function (for example, a mapping relationship between a queue and a queue unit in a device memory), a computing power resource (for example, an accelerator group for computing the accelerated computing task), a memory resource (for example, a mapping relationship between a virtual memory and a physical memory), and the like. This is not specifically limited herein. It may be understood that, for the GPU, the memory resource may also be referred to as a video memory resource (for example, a mapping relationship between a virtual video memory and a physical video memory). That is, for the GPU, a memory may be referred to as a video memory.

Generally, the management command is configured by an administrator. For example, the administrator configures some parameters in a driver package, so that the host end obtains the management command.

Optionally, the accelerated computing system is a heterogeneous accelerated computing system, and the accelerated computing task is a heterogeneous accelerated computing task.

Step 202: The host end sends the management command to the device end, and correspondingly, the device end receives the management command sent by the host end.

After obtaining the management command, the host end sends the management command to the device end, so that the device end configures a register based on the management command. The register is configured to virtualize the physical resource in the device end.

Optionally, the host end sends the management command to the device end by using a physical function presented by the device end on the host end. The physical function may be understood as a logical unit configured to provide an acceleration function. In this manner, the management command is transmitted by using the physical function. Generally, the physical function is used by an administrator, and the virtual function is used by a user. Therefore, the management command is transmitted by using the physical function, so that the transmission of the management command is more secure.

Optionally, the management command is specifically used to configure the register. The register is configured to configure a resource related to the virtual function.

Step 203: The device end configures the register based on the management command.

After the device end receives, by using the physical function, the management command sent by the host end, the device end configures the register in the device end based on the management command. The register is configured to virtualize the physical resource in the device end, or this is understood as that the register is configured to configure the resource related to the virtual function, or this is understood as that the register is configured to configure the physical resource corresponding to the virtual resource. For example, the register is configured to configure a mapping relationship between the virtual resource of the virtual function and the physical resource.

Optionally, a processor in the device end runs code of a software configuration module, and configures a related register for a virtual function on a virtual function presentation apparatus based on the management command. The register may be configured to configure the mapping relationship between the physical resource and the virtual resource.

In this embodiment of this application, one register may correspond to a resource of one virtual function, or may correspond to resources of a plurality of virtual functions. This is not specifically limited herein.

The following separately describes a plurality of cases of the resource related to the virtual function.

A first case is the memory resource. In this case, the register is a virtual memory configuration register.

Optionally, the management command is used to configure the plurality of virtual functions, and is further used to configure the memory resource of the virtual function (namely, a mapping relationship between a virtual memory of the virtual function and a physical memory in the device end). The memory resource is used for data access and use in a process in which an accelerator performs the accelerated computing task. The processor in the device end runs the code of the software configuration module, and configures the virtual memory configuration register in the virtual function presentation apparatus based on the management command. The virtual memory configuration register then configures mapping from the virtual memory of the virtual function to the physical memory in the device memory.

Optionally, an example in which the host end communicates with the device end through PCIe is used. The virtual function presentation apparatus may be a PCIe controller in the device end, and the virtual memory configuration register may describe a mapping relationship from the virtual memory to the physical memory in the device memory by using an address translation unit (address translation unit, ATU) window of the PCIe or a newly added configuration.

It may be understood that, for system security, memory resources of different virtual functions are different, in other words, virtual memories of different virtual functions have different physical memories in the device memory.

Optionally, the virtual function presentation apparatus presents a virtual memory corresponding to the memory resource for the virtual function based on the management command. An example in which the host end communicates with the device end through the PCIe and a presentation manner of the virtual function is SR-IOV is used. The virtual function is a VF device of PCIe SR-IOV, and the virtual function presentation apparatus may present a corresponding virtual memory by using a PCIe bar ATU window.

To more intuitively learn how the device end configures the memory resource of the virtual function based on the management command, the following uses an example in which there are three virtual functions for description.

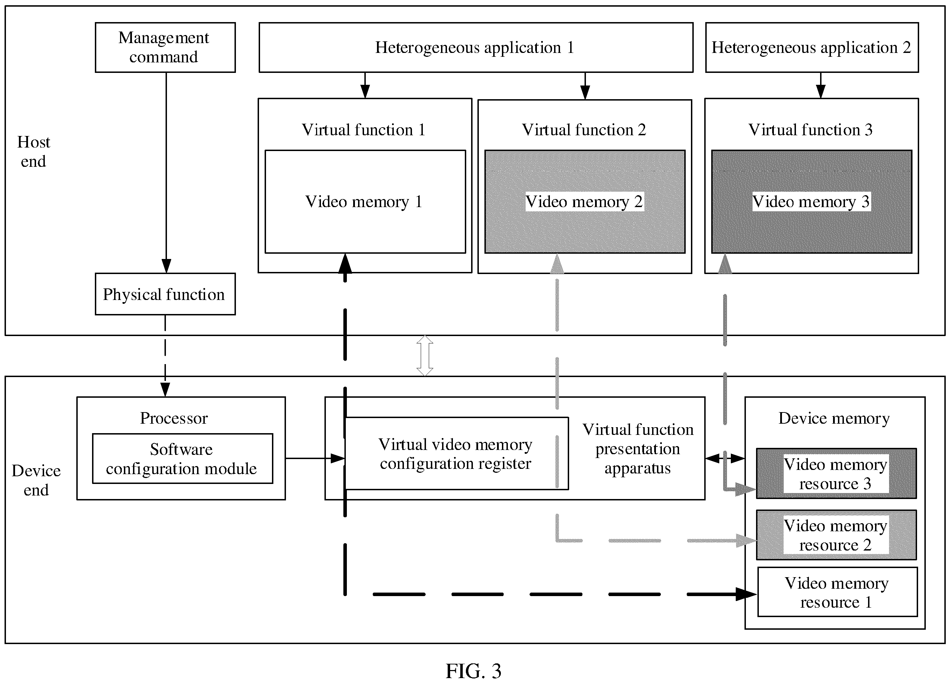

For example, as shown in FIG. 3, the device end describes, by using the virtual memory configuration register, a mapping relationship between a virtual memory 1 and a physical memory 1 in the device memory, a mapping relationship between a virtual memory 2 and a physical memory 2 in the device memory, and a mapping relationship between a virtual memory 3 and a physical memory 3 in the device memory. That is, the three segments of device memories are respectively mapped to a virtual function 1, a virtual function 2, and a virtual function 3, and are used as respective memories of the virtual function 1, the virtual function 2, and the virtual function 3. Further, for secure isolation, physical memories of the virtual function 1, the virtual function 2, and the virtual function 3 in the device memory do not overlap. It may be understood that quantities of virtual functions, memories, and virtual memory configuration registers are not limited herein.

Optionally, an example in which the host end communicates with the device end through the PCIe is used. The host end may directly access a memory in the device end through a PCIe controller. Certainly, the host end may alternatively access the memory in the device end by using an address.

In this manner, a size of the memory of the virtual function may be flexibly configured, and the software configuration module and the virtual memory configuration register in the processor in the device end may implement a flexible configuration method. For example, the size of the memory of the virtual function may alternatively be flexibly defined by mapping several scattered device memory segments to a virtual function. Memories of all virtual functions do not affect each other and are isolated from each other. Compared with a conventional technology in which a memory size of each slice in a MIG technology is fixed and cannot be flexibly configured, this manner can be used to flexibly configure a memory resource.

A second case is the communication resource. In this case, the register is a queue configuration register of the virtual function.

Optionally, the management command is used to configure the plurality of virtual functions, and is further used to configure the communication resource (which may also be understood as configuring a queue unit that is in the device memory and that corresponds to a queue of the virtual function) of the virtual function. The communication resource is used to configure a queue presented by the device end to the host end. The queue unit corresponding to the queue is located in the device end, for example, may be located in the device memory, or may be a dynamic random access memory (dynamic random access memory, DRAM) in a hardware scheduling apparatus. In addition, the queue is bidirectional, includes a request queue sent by the host end to the device end, and includes a response queue sent by the device end to the host end. Alternatively, it is understood that the accelerated computing task or indication information in the queue of the virtual function is stored in the device end.

The processor in the device end runs the code of the software configuration module, and configures the queue configuration register in the hardware scheduling apparatus based on the management command. A correspondence between the virtual function and the queue unit can be configured in the queue configuration register.

Optionally, each queue unit corresponds to a group of queues that have a minimum quantity and that cannot be further divided.

Optionally, an example in which the host end communicates with the device end through the PCIe is used. The virtual function presentation apparatus may be a PCIe controller in the device end. If the virtual function is a VF device of PCIe SR-IOV, the virtual function presentation apparatus may present a corresponding queue by using a PCIe bar ATU window.

It may be understood that, for system security, queues of different virtual functions are different, and the queues of the different virtual functions do not affect each other and are isolated from each other.

To more intuitively learn how the device end configures the communication resource of the virtual function based on the management command, the following uses an example in which there are two virtual functions for description.

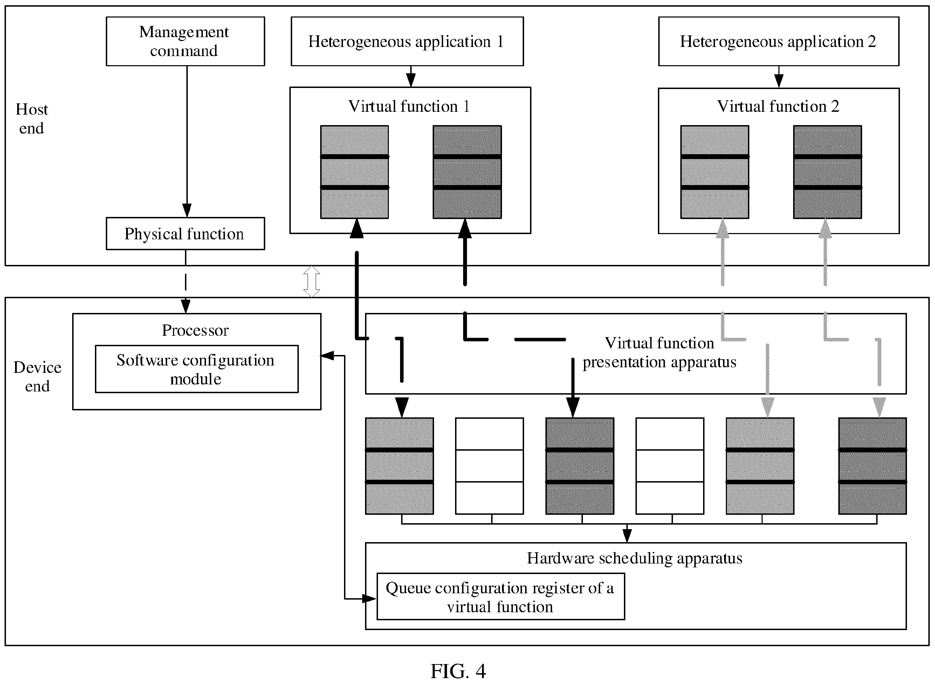

For example, as shown in FIG. 4, the device end describes a correspondence between the virtual function and the queue unit by using the queue configuration register of the virtual function. There are six queue units, which are respectively a queue unit 0, a queue unit 1, a queue unit 2, a queue unit 3, a queue unit 4, and a queue unit 5. It can be seen that the queue unit 0 and the queue 2 are mapped to a virtual function 1, and the queue unit 4 and the queue unit 5 are mapped to a virtual function 2. The queue 1 and the queue 3 may be understood as idle queues. Further, for secure isolation, addresses of queues of the virtual function 1 and the virtual function 2 in the device memory are different. It may be understood that quantities of virtual functions, queues, and queue configuration registers of the virtual function are not limited herein.

In this manner, a size of the queue of the virtual function may be flexibly configured, and the software configuration module and the queue configuration register in the processor in the device end may implement a flexible configuration method. For example, the size of the queue of the virtual function may alternatively be flexibly defined by mapping several queue units to a virtual function. Queues of all virtual functions do not affect each other and are isolated from each other.

A third case is the computing power resource. In this case, the register is a hardware resource group configuration register.

Optionally, the management command is used to configure the plurality of virtual functions, and is further used to query all computing power resources or configure the computing power resource of the virtual function. The computing power resource includes various accelerators, for example, a graphics accelerator, a vector operation accelerator, a matrix operation accelerator, and the like.

The processor in the device end runs the code of the software configuration module, and configures the hardware resource group configuration register in the hardware scheduling apparatus based on the management command. The hardware resource group configuration register then configures a hardware resource group of the virtual function. The hardware resource group is a smallest isolation unit of the hardware scheduling apparatus. It may be understood that, for system security, the hardware resource group configuration register may add accelerators allocated to different virtual functions to different hardware resource groups to complete resource isolation.

To more intuitively learn how the device end configures the computing power resource of the virtual function based on the management command, the following uses an example in which there are two virtual functions for description.

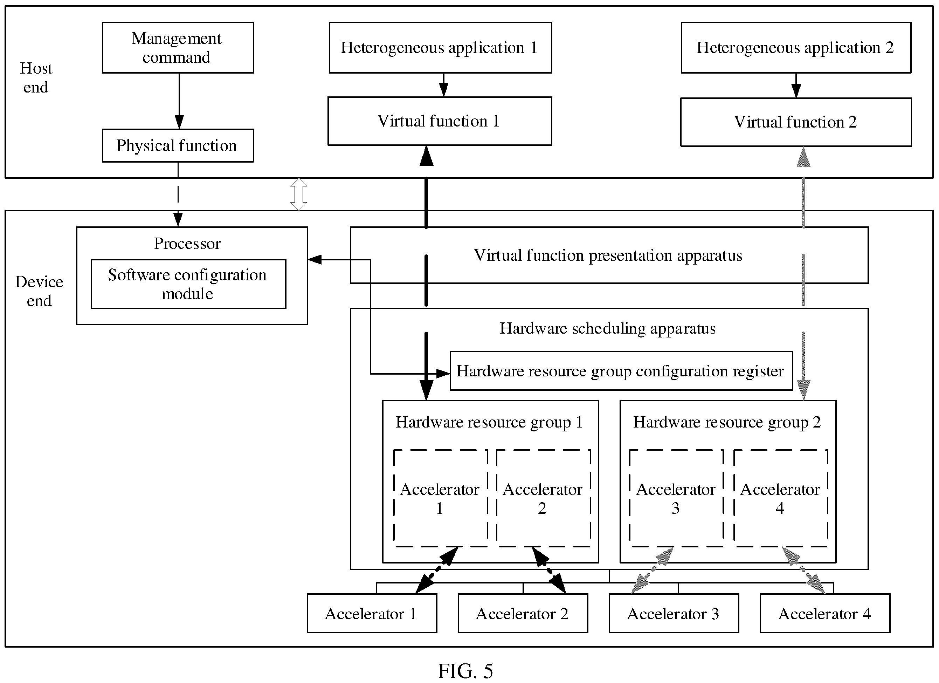

For example, as shown in FIG. 5, the device end configures the hardware resource group of the virtual function by using the hardware resource group configuration register. That is, an accelerator 1 and an accelerator 2 are configured for a virtual function 1, and the accelerator 1 and the accelerator 2 are used as computing power resources of the virtual function 1 and are adjusted to a hardware resource group 1. An accelerator 3 and an accelerator 4 are configured for a virtual function 2, and the accelerator 3 and the accelerator 4 are used as computing power resources of the virtual function 2 and are adjusted to a hardware resource group 2. It may be understood that the foregoing accelerators each are an accelerator, and may be a graphics accelerator, a vector operation accelerator, a matrix operation accelerator, or the like. A quantity of virtual functions, a quantity of hardware resource group configuration registers, and a quantity and types of accelerators are not specifically limited herein. Further, for secure isolation, there may be no same accelerator in the hardware resource group of the virtual function 1 and the hardware resource group of the virtual function 2. Alternatively, it is understood that one accelerator belongs to only one hardware resource group, and different hardware resource groups cannot share one accelerator.

In addition, after configuring the computing power resource for the virtual function, the device end may further query, by using the management command, the computing power resource corresponding to the virtual function.

In this manner, the computing power resource of the virtual function may be flexibly configured, and different computing power resources (for example, the hardware resource groups) do not affect each other.

It may be understood that the foregoing several resources are merely examples. During actual application, another resource may be configured according to an actual requirement. This is not specifically limited herein.

Step 204: The host end sends the accelerated computing task to the device end by using the request queue of the virtual function, and correspondingly, the device end receives, by using the request queue of the virtual function, the accelerated computing task sent by the host end. This step is optional.

Optionally, after the device end configures the resource related to the virtual function by using the foregoing step 201 to step 203, because the resource is used by the device end to perform the accelerated computing task, and the accelerated computing task is used by the device end to run an accelerator that corresponds to the accelerated computing task and that is in the device end, the host end may send the accelerated computing task to the device end by using the configured request queue. Alternatively, it is understood that a heterogeneous application in the host end may deliver the accelerated computing task to the device end by using the request queue of the virtual function. Correspondingly, the device end receives, by using the request queue of the virtual function, the accelerated computing task sent by the host end.

Further, the heterogeneous application running on the processor in the host end writes a request for the accelerated computing task into the request queue of the virtual function by using a heterogeneous runtime (for example, a runtime dynamic library). The request queue is virtually presented by the device end to the host end, and the request queue is in the memory in the device end (for example, in the device memory or in a DRAM of the hardware scheduling apparatus).

The accelerated computing task in this embodiment of this application may be at least one of the following: a graphics accelerated computing task, a vector operation accelerated computing task, a matrix operation accelerated computing task, a data copy task, and the like.

In this embodiment of this application, after the host end sends and delivers the accelerated computing task to the device end, the device end may be triggered, by using a doorbell (doorbell) register provided by the hardware scheduling apparatus, to process the accelerated computing task. The device end may alternatively trigger, by polling, the device end to process the accelerated computing task. This is not specifically limited herein.

Step 205: The device end delivers the accelerated computing task to a corresponding accelerator group based on the virtual function to which the request queue belongs. This step is optional.

Optionally, after the device end receives, by using the request queue of the virtual function, the accelerated computing task sent by the host end, the hardware scheduling apparatus in the device end may deliver, based on the virtual function to which the request queue belongs, the accelerated computing task to the corresponding accelerator group (that is, an accelerator group corresponding to the virtual function to which the request queue belongs), so that the accelerator group performs the accelerated computing task. In a process of performing the accelerated computing task, the accelerator accesses a memory corresponding to the virtual function in the device memory, reads data needed by the accelerated computing task into the accelerator for computing, and writes data generated in a computing process and a computing result into the memory corresponding to the virtual function. The accelerator group includes at least one type of accelerator (for example, including types such as graphics accelerated computing, matrix accelerated computing, vector accelerated computing, and data copy accelerated computing). The hardware scheduling apparatus allocates, based on a type of the accelerated computing task, the accelerated computing task to an accelerator corresponding to the type in the accelerator group.

Further, the accelerated computing task generally includes a segment of code run on the accelerator, and the accelerated computing task is implemented by using an instruction set that can be identified by the accelerator. After completing the accelerated computing task, the accelerator may notify, by using an interrupt, a register, or the like, the hardware scheduling apparatus whether the accelerated computing task is completed.

For example, after completing the accelerated computing task, the accelerator notifies the hardware scheduling apparatus that the accelerated computing task is completed.

Optionally, the hardware scheduling apparatus may perform scheduling based on a computing power of the virtual function to which the request queue belongs, and may specifically implement scheduling based on a time slice, a priority, or the like. This is not specifically limited herein.

Optionally, the device end includes at least one of the following: a graphics processing unit GPU, a neural network processing unit NPU, a data processing unit DPU, a tensor processing unit TPU, a DSP, an ASIC, an FPGA, and the like. Specifically, the accelerator in the device end may be at least one of the following: the GPU, the NPU, the DPU, the TPU, the DSP, the ASIC, the FPGA, and the like.

Step 206: The device end sends the indication information to the host end by using the response queue of the virtual function, and correspondingly, the host end receives, by using the response queue of the virtual function, the indication information sent by the device end. This step is optional.

Optionally, after the accelerator in the device end notifies the hardware scheduling apparatus that the accelerated computing task is completed, the device end may send the indication information to the host end by using the response queue of the virtual function. Correspondingly, the host end receives, by using the response queue of the virtual function, the indication information sent by the device end. The indication information indicates whether the accelerator in the device end completes the accelerated computing task.

Further, the hardware scheduling apparatus may write a response to the completion into the response queue in the queue, and may notify, by using an interrupt controller, the host end whether the accelerated computing task is completed.

For example, the hardware scheduling apparatus notifies the host end that the accelerated computing task has been completed.

Step 207: The host end obtains, from the memory in the device end, data generated by the accelerator in computing the accelerated computing task. This step is optional.

After determining that the accelerator in the device end completes the accelerated computing task, the host end may obtain, from the memory of the virtual function corresponding to the accelerated computing task, the data generated by the accelerator in computing the accelerated computing task. Certainly, a result of performing the accelerated computing task by the accelerator may also be obtained from the memory in the device end.

To more intuitively learn about data plane transmission, the following uses an example in which there are two heterogeneous applications, one heterogeneous application includes one virtual function and two hardware resource groups, and each hardware resource group includes two accelerators for description.

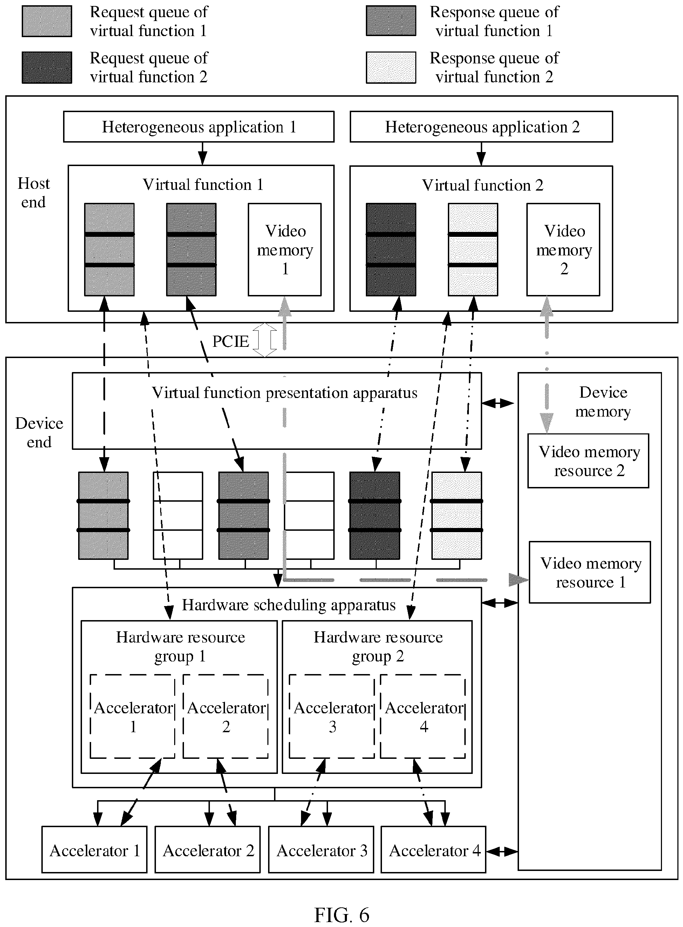

For example, refer to FIG. 6. A heterogeneous application 1 and a heterogeneous application 2 are run on the host end. The heterogeneous application 1 uses a virtual function 1, and the heterogeneous application 2 uses a virtual function 2. A request queue 1, a response queue 1, a virtual memory 1, and a hardware resource group 1 are configured for the virtual function 1, and a request queue 2, a response queue 2, a virtual memory 2, and a hardware resource group 2 are configured for the virtual function 2. It is assumed that the heterogeneous application 1 in the host end writes the accelerated computing task into the request queue 1 of the virtual function 1, and the hardware scheduling apparatus in the device end parses the accelerated computing task in the request queue 1, and delivers the accelerated computing task to an accelerator 1 and/or an accelerator 2 based on a type of the accelerated computing task. The accelerator 1 and/or the accelerator 2 obtain/obtains, from a physical memory 1 in the device memory, data needed for computing the accelerated computing task, and writes, into the physical memory 1, data generated in a process of computing the accelerated computing task and a computing result. After completing the computation, the accelerator notifies the hardware scheduling apparatus that the accelerated computing task is completed. The hardware scheduling apparatus writes a response into the response queue 1, and notifies the host end that the accelerated computing task is completed. The heterogeneous application 1 in the host end finds the physical memory 1 by accessing the virtual memory 1 of the virtual function 1, to obtain the result of the accelerated computing task, thereby implementing accelerated computing.

It may be understood that, after performing the accelerated computing task, the device end may alternatively copy data generated during performing the accelerated computing task to the memory in the host end, so that the host end may also obtain, from the memory in the host end, the data generated when the device end computes the accelerated computing task. A manner in which the host end obtains the data generated in the accelerated computing task is not limited in embodiments of this application.

In a possible implementation, the device virtualization method provided in this embodiment of this application includes step 201 to step 203. In this manner, step 201 to step 203 may be understood as a management plane communication process. In another possible implementation, the device virtualization method provided in this embodiment of this application includes step 201 to step 207. In this manner, step 201 to step 203 may be understood as a management plane communication process. Step 204 to step 207 may be understood as a data plane communication process. The data plane communication process in the device virtualization method provided in this embodiment is not limited herein. A manner in step 204 to step 207 may be used, or another manner may be used.

In this embodiment of this application, the device end virtualization method is implemented by combining software and hardware. In addition, a management plane may flexibly configure the resource (for example, the memory resource, the communication resource, or the computing power resource) related to the virtual function by using a software configuration register, or it may be understood that the virtual function is flexibly configured by using the management command and the register, to implement a resource needed by the accelerated computing task. In addition, the processor in the device end does not need to participate in the data plane transmission, the accelerated computing task and the indication information are stored in the memory in the device end, and the memory may be mapped to the virtual function for use. The device end may directly access the accelerated computing task in the queue, and the device end does not need to initiate a DMA operation to obtain the accelerated computing task. To be specific, the data plane transmission does not need a DMA queue, and uses pure hardware (for example, a hardware scheduling apparatus and an accelerator, where the hardware scheduling apparatus is configured to schedule the queue, and the accelerator is configured to, in response to scheduling of the hardware scheduling apparatus, perform a corresponding accelerated computing task), so that efficiency of processing the accelerated computing task by the device end can be improved, and flexible configuration and isolation of a resource are supported.

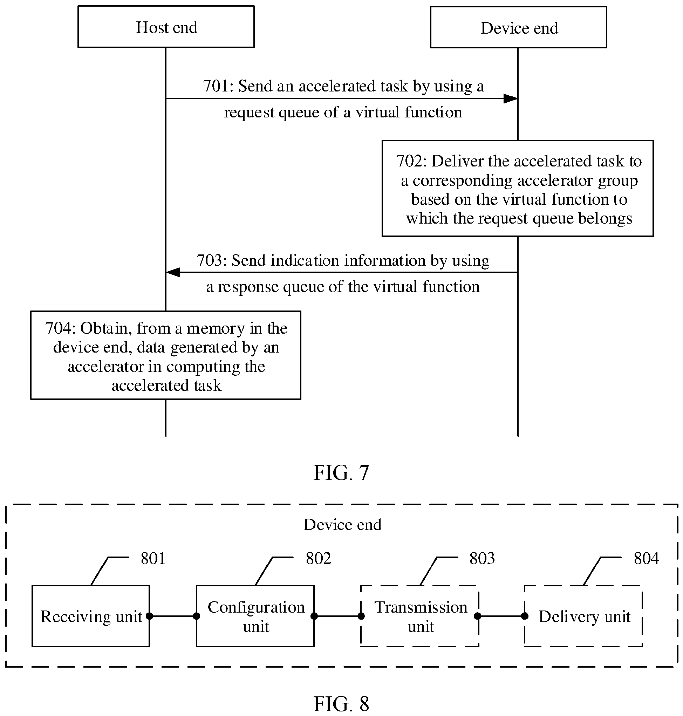

The following describes another device virtualization method according to an embodiment of this application. FIG. 7 is another schematic flowchart of a device virtualization method according to an embodiment of this application. The device virtualization method may be applied to a virtualization scenario, including at least one of the following: GPU virtualization, NPU virtualization, DPU virtualization, TPU virtualization, and the like (or understood as that a device end includes at least one of a GPU, an NPU, a DPU, a TPU, and the like), and is mainly used to virtualize one device end into a plurality of virtual devices. The method may be jointly performed by the device end and a host end, or may be j ointly performed by a hardware scheduling apparatus in the device end and a host end. The method may include step 701 to step 704. The following describes step 701 to step 704 in detail.
Step 701: The host end sends an accelerated computing task to the device end by using a request queue of a virtual function, and correspondingly, the device end receives, by using the request queue of the virtual function, the accelerated computing task sent by the host end.
Step 702: The device end delivers the accelerated computing task to a corresponding accelerator group based on the virtual function to which the request queue belongs.
Step 703: The device end sends indication information to the host end by using a response queue of the virtual function, and correspondingly, the host end receives, by using the response queue of the virtual function, the indication information sent by the device end. This step is optional.
Step 704: The host end obtains, from a memory in the device end, data generated by the accelerator in computing the accelerated computing task.

Step 701 to step 704 in this embodiment are similar to step 204 to step 207 in the embodiment shown in FIG. 2. For details about step 701 to step 704, refer to the descriptions of step 204 to step 207 in the embodiment shown in FIG. 2. Details are not described herein again.

This embodiment may be understood as a data plane communication process, and a management plane communication process in the device virtualization method provided in this embodiment is not limited herein.

In a possible implementation, the device virtualization method in this embodiment may include step 701, step 702, and step 704. In another possible implementation, the device virtualization method in this embodiment may include step 701 to step 704.

In this embodiment of this application, the device end virtualization method is implemented by combining software and hardware. In addition, a processor in the device end does not need to participate in the data plane transmission, the accelerated computing task and the indication information are stored in the memory in the device end, and the memory may be mapped to the virtual function for use. The device end may directly access the accelerated computing task in the queue, and the device end does not need to initiate a DMA operation to obtain the accelerated computing task. To be specific, the data plane transmission does not need a DMA queue, and uses pure hardware (for example, a hardware scheduling apparatus and an accelerator, where the hardware scheduling apparatus is configured to schedule the queue, and the accelerator is configured to, in response to scheduling of the hardware scheduling apparatus, perform a corresponding accelerated computing task), so that efficiency of processing the accelerated computing task by the device end can be improved, and flexible configuration and isolation of a resource are supported.

The foregoing describes the device virtualization method in embodiments of this application, and the following describes a device end in embodiments of this application. Refer to FIG. 8. An embodiment of the device end in embodiments of this application includes:
a receiving unit 801, configured to receive a management command from a host end, where the management command is used to virtualize a physical resource in the device end to provide a virtual function to the host end for use, and the physical resource is used to perform an accelerated computing task; and
a configuration unit 802, configured to configure a register in the device end based on the management command, where the register is configured to virtualize the physical resource.

Optionally, the device end may further include a transmission unit 803, configured to transmit the accelerated computing task and indication information to the host end by using a queue of the virtual function, where the accelerated computing task is performed by an accelerator that corresponds to the accelerated computing task and that is in the device end, the indication information indicates whether the device end completes the accelerated computing task, the queue is virtually presented by the device end to the host end, and the accelerated computing task and the indication information are stored in a memory in the device end.

Optionally, the device end may further include a delivery unit 804, configured to deliver, based on the virtual function to which a request queue belongs, the accelerated computing task to an accelerator corresponding to the virtual function, where the accelerator is configured to complete the accelerated computing task, and data generated by the accelerator in computing the accelerated computing task is stored in the memory in the device end.

In this embodiment, operations performed by units in the device end are similar to those described in embodiments shown in FIG. 2 to FIG. 6. Details are not described herein again.

In this embodiment, in a heterogeneous computing system, the receiving unit 801 receives the management command from the host end, where the management command is used to configure a resource related to the virtual function presented by the device end on the host end, and the resource is used by the device end to perform the accelerated computing task in heterogeneous computing. The configuration unit 802 configures the register based on the management command, where the register is configured to configure the physical resource corresponding to the virtual resource. Compared with a conventional technology in which a configuration of each GPU instance is fixed, in embodiments of this application, the device end may flexibly configure the virtual function by using the management command and the register, to implement a resource needed by the accelerated computing task.

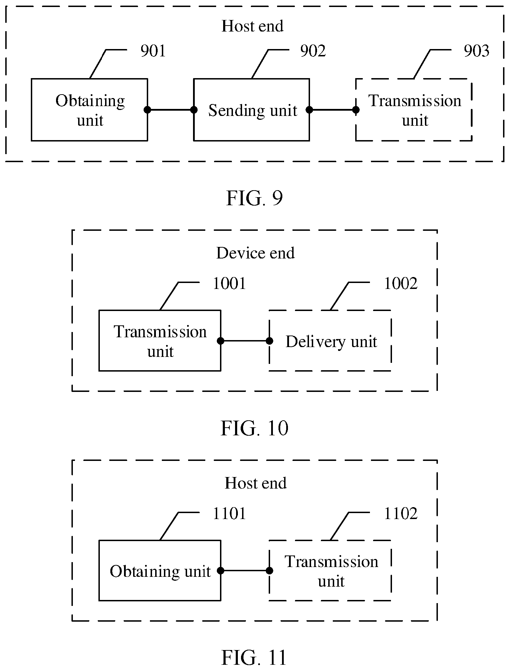

Refer to FIG. 9. An embodiment of a host end in embodiments of this application includes:
an obtaining unit 901, configured to obtain a management command, where the management command is used to virtualize a physical resource in a device end to provide a virtual function to the host end for use, and the physical resource is used to perform an accelerated computing task; and
a sending unit 902, configured to send the management command to the device end, so that the device end configures a register by using the management command, where the register is configured to virtualize the physical resource.

Optionally, the host end may further include a transmission unit 903, configured to transmit the accelerated computing task and/or indication information to the device end by using a queue of the virtual function, where the accelerated computing task is performed by an accelerator that corresponds to the accelerated computing task and that is in the device end, the indication information indicates whether the device end completes the accelerated computing task, the queue is virtually presented by the device end to the host end, and the accelerated computing task and the indication information are stored in a memory in the device end.

In this embodiment, operations performed by units in the host end are similar to those described in embodiments shown in FIG. 2 to FIG. 6. Details are not described herein again.

In this embodiment, in a heterogeneous computing system, the sending unit 902 sends the management command to the device end, so that the device end configures the register by using the management command, where the register is configured to configure a resource. Compared with a conventional technology in which a configuration of each GPU instance is fixed, in this embodiment of this application, the sending unit 902 sends the management command to the device end, so that the device end may flexibly configure the virtual function by using the management command and the register, to implement a resource needed by the accelerated computing task.

Refer to FIG. 10. Another embodiment of a device end in embodiments of this application includes:
a transmission unit 1001, configured to transmit an accelerated computing task to a host end by using a queue of a virtual function presented by the device end on the host end, where the accelerated computing task is performed by an accelerator that corresponds to the accelerated computing task and that is in the device end, the queue is virtually presented by the device end to the host end, and the accelerated computing task is stored in a memory in the device end.

Optionally, the device end may further include a delivery unit 1002, configured to deliver the accelerated computing task to the accelerator based on the virtual function to which the queue belongs, where the accelerator group is configured to complete the accelerated computing task, and data generated by the accelerator in computing the accelerated computing task is stored in the memory in the device end.

In this embodiment, operations performed by units in the device end are similar to those described in the embodiment shown in FIG. 7. Details are not described herein again.

In this embodiment, a processor in the device end does not need to participate in data plane transmission, the accelerated computing task and indication information are stored in the memory in the device end, and the memory may be mapped to the virtual function for use. The device end may directly access the accelerated computing task in the queue, and the device end does not need to initiate a DMA operation to obtain the accelerated computing task. To be specific, the data plane transmission does not need a DMA queue, and uses pure hardware, to improve efficiency of processing the accelerated computing task by the device end.

Refer to FIG. 11. Another embodiment of a host end in embodiments of this application includes:
an obtaining unit 1101, configured to obtain an accelerated computing task; and
a transmission unit 1102, configured to transmit an accelerated computing task to a device end by using a queue of a virtual function presented by the device end on the host end, where the accelerated computing task is performed by an accelerator that corresponds to the accelerated computing task and that is in the device end, the queue is virtually presented by the device end to the host end, and the accelerated computing task is stored in a memory in the device end.

In this embodiment, operations performed by units in the host end are similar to those described in the embodiment shown in FIG. 7. Details are not described herein again.

In this embodiment, a processor in the device end does not need to participate in data plane transmission, the accelerated computing task and indication information are stored in the memory in the device end, and the memory may be mapped to the virtual function for use. The device end may directly access the accelerated computing task in the queue, and the device end does not need to initiate a DMA operation to obtain the accelerated computing task. To be specific, the data plane transmission does not need a DMA queue, and uses pure hardware, to improve efficiency of processing the accelerated computing task by the device end.

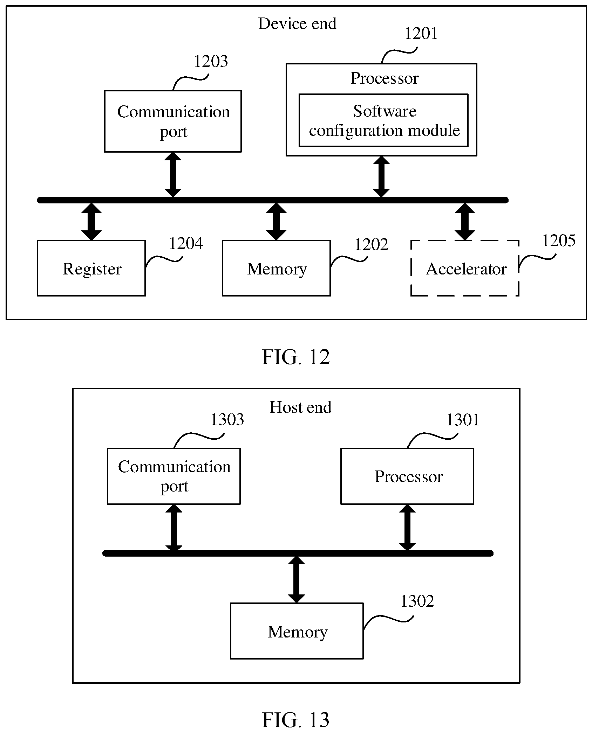

FIG. 12 is a schematic diagram of a structure of another device end according to this application. The device end may include a processor 1201, a memory 1202, a communication port 1203, and a register 1204. The processor 1201, the memory 1202, the communication port 1203, and the register 1204 are interconnected by using a line. The memory 1202 stores program instructions and data.

The memory 1202 stores program instructions and data that correspond to the steps that are performed by the device end and that are in the corresponding implementations shown in FIG. 1 to FIG. 6.

The processor 1201 is configured to perform the steps that are performed by the device end and that are shown in any one of embodiments shown in FIG. 1 to FIG. 6. The processor 1201 includes a software configuration module, configured to configure a resource of a virtual function. For details, refer to the descriptions of the software configuration module in embodiments shown in FIG. 1 to FIG. 6. Details are not described herein again.

The communication port 1203 may be configured to receive and send data, and is configured to perform the steps that are related to obtaining, sending, and receiving and that are in any one of embodiments shown in FIG. 1 to FIG. 6.

The register 1204 is used by the device end to configure a mapping relationship between a virtual resource of the virtual function and a physical resource.

Optionally, the register 1204 may be understood as an interface for interacting with each of the processor 1201, a PCIe controller (if any), and a hardware scheduling apparatus (if any).

Optionally, the device end may further include an accelerator 1205, configured to perform the accelerated computing task in embodiments shown in FIG. 1 to FIG. 6.

In an implementation, the device end may include more or fewer components than those in FIG. 12. For example, the device end shown in FIG. 12 may further include at least one of the accelerator, the PCIe controller, the hardware scheduling apparatus, and the like. This is merely an example for description in this application, and is not limited thereto.

FIG. 13 is a schematic diagram of a structure of another host end according to this application. The host end may include a processor 1301, a memory 1302, and a communication port 1303. The processor 1301, the memory 1302, and the communication port 1303 are interconnected by using a line. The memory 1302 stores program instructions and data.

The memory 1302 stores program instructions and data that correspond to the steps that are performed by the host end and that are in the corresponding implementations shown in FIG. 1 to FIG. 6.

The processor 1301 is configured to perform the steps that are performed by the host end and that are shown in any one of embodiments shown in FIG. 1 to FIG. 6.

The communication port 1303 may be configured to receive and send data, and is configured to perform the steps that are related to obtaining, sending, and receiving and that are in any one of embodiments shown in FIG. 1 to FIG. 6.

Further, the communication port may be connected to the device end shown in FIG. 12, to implement an accelerated computing task.

In an implementation, the host end may include more or fewer components than those in FIG. 13. This is merely an example for description in this application, and is not limited thereto.

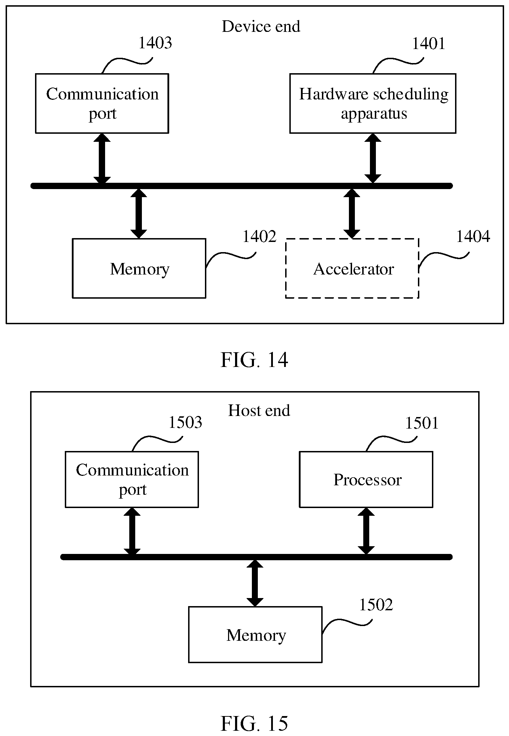

FIG. 14 is a schematic diagram of a structure of another device end according to this application. The device end may include a hardware scheduling apparatus 1401, a memory 1402, and a communication port 1403. The hardware scheduling apparatus 1401, the memory 1402, and the communication port 1403 are interconnected by using a line. The memory 1402 stores program instructions and data.

The memory 1402 stores program instructions and data that correspond to the steps that are performed by the device end and that are in the corresponding implementations shown in FIG. 7. For example, the memory 1402 is configured to map a queue of a virtual function.

The hardware scheduling apparatus 1401 is configured to perform the steps that are performed by the device end and that are shown in any one of embodiments shown in FIG. 7. For example, the hardware scheduling apparatus 1401 is configured to schedule the queue.

The communication port 1403 may be configured to receive and send data, and is configured to perform the steps that are related to obtaining, sending, and receiving and that are in any one of embodiments shown in FIG. 7.

Optionally, the device end may further include an accelerator 1404, configured to perform the accelerated computing task in the embodiment shown in FIG. 7.

In an implementation, the device end may include more or fewer components than those in FIG. 14. For example, the device end shown in FIG. 14 may further include an accelerator, configured to respond to scheduling of the hardware scheduling apparatus 1401 to perform a corresponding accelerated computing task. This is merely an example for description in this application, and is not limited thereto.

FIG. 15 is a schematic diagram of a structure of another host end according to this application. The host end may include a processor 1501, a memory 1502, and a communication port 1503. The processor 1501, the memory 1502, and the communication port 1503 are interconnected by using a line. The memory 1502 stores program instructions and data.

The memory 1502 stores program instructions and data that correspond to the steps that are performed by the host end and that are in the corresponding implementations shown in FIG. 7.

The processor 1501 is configured to perform the steps that are performed by the host end and that are shown in any one of embodiments shown in FIG. 7.

The communication port 1503 may be configured to receive and send data, and is configured to perform the steps that are related to obtaining, sending, and receiving and that are in any one of embodiments shown in FIG. 7.

Further, the communication port may be connected to the device end shown in FIG. 14, to implement an accelerated computing task.

In an implementation, the host end may include more or fewer components than those in FIG. 15. This is merely an example for description in this application, and is not limited thereto.

In the several embodiments provided in this application, it should be understood that the disclosed system, apparatus, and method may be implemented in other manners. For example, the foregoing apparatus embodiments are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected depending on actual requirements to achieve the objectives of the solutions in embodiments.

In addition, functional units in embodiments of this application may be integrated into one processing unit, each of the units may exist alone physically, or two or more units are integrated into one unit. All or some of the foregoing integrated units may be implemented by using software, hardware, firmware, or any combination thereof.

When the integrated units are implemented by using software, all or some of the integrated units may be implemented in a form of a computer program product. The computer program product includes one or more computer instructions. When the computer program instructions are loaded and performed on a computer, the procedure or functions according to embodiments of the present invention are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

In the specification, claims, and the accompanying drawings of this application, the terms "first", "second", and the like are intended to distinguish similar objects but do not necessarily indicate a specific order or sequence. It should be understood that the terms used in such a way are interchangeable in proper circumstances, and this is merely a discrimination manner for describing objects having a same attribute in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

## Claims

1. A device virtualization method, wherein the method is applied to an accelerated computing system, the accelerated computing system comprises a host end and a device end connected to the host end, and the method comprises:
receiving, by the device end, a management command from the host end, wherein the management command is used to virtualize a physical resource in the device end to provide a virtual function to the host end for use, and the physical resource is used to perform an accelerated computing task; and
configuring, by the device end, a register in the device end based on the management command, wherein the register is configured to virtualize the physical resource.

2. The method according to claim 1, wherein the method further comprises:
transmitting, by the device end, the accelerated computing task to the host end by using a queue, wherein the queue is virtually presented by the device end to the host end, and the accelerated computing task is stored in a memory in the device end.

3. The method according to claim 1 or 2, wherein the accelerated computing task comprises at least one of the following: a graphics accelerated computing task, a vector operation accelerated computing task, a matrix operation accelerated computing task, a data copy accelerated computing task, and a video encoding and decoding accelerated computing task.

4. The method according to any one of claims 1 to 3, wherein the register is configured to configure at least one of the following:
a quantity of virtual functions;
a mapping relationship between a virtual memory of the virtual function and a physical memory in the device end;
a mapping relationship between a queue of the virtual function and a memory address in the device end, wherein the queue is virtually presented by the device end to the host end, the queue is used by the host end to transmit the accelerated computing task and indication information to the device end, and the indication information indicates whether the device end completes the accelerated computing task; and
quantities of accelerators of different types in an accelerator group of the virtual function.

5. The method according to any one of claims 1 to 4, wherein when there are a plurality of virtual functions, different virtual functions correspond to different physical resources.

6. The method according to any one of claims 1 to 5, wherein the accelerated computing system is a heterogeneous accelerated computing system, and the accelerated computing task is a heterogeneous accelerated computing task.

7. A device virtualization method, wherein the method is applied to an accelerated computing system, the accelerated computing system comprises a host end and a device end connected to the host end, and the method comprises:
obtaining, by the host end, a management command, wherein the management command is used to virtualize a physical resource in the device end to provide a virtual function to the host end for use, and the physical resource is used to perform an accelerated computing task; and
sending, by the host end, the management command to the device end, so that the device end configures a register by using the management command, wherein the register is configured to virtualize the physical resource.

8. The method according to claim 7, wherein the method further comprises:
transmitting, by the host end, the accelerated computing task to the device end by using a queue of the virtual function, wherein the queue is virtually presented by the device end to the host end, and the accelerated computing task is stored in a memory in the device end.

9. The method according to claim 7 or 8, wherein the accelerated computing task comprises at least one of the following: a graphics accelerated computing task, a vector operation accelerated computing task, a matrix operation accelerated computing task, a data copy accelerated computing task, and a video encoding and decoding accelerated computing task.

10. The method according to any one of claims 7 to 9, wherein the register is configured to configure at least one of the following:
a quantity of virtual functions;
a mapping relationship between a virtual memory of the virtual function and a physical memory in the device end;
a mapping relationship between a queue of the virtual function and a memory address in the device end, wherein the queue is virtually presented by the device end to the host end, the queue is used by the host end to transmit the accelerated computing task and indication information to the device end, and the indication information indicates whether the device end completes the accelerated computing task; and
quantities of accelerators of different types in an accelerator group of the virtual function.

11. The method according to any one of claims 7 to 10, wherein when there are a plurality of virtual functions, different virtual functions correspond to different physical resources.

12. The method according to any one of claims 7 to 11, wherein the accelerated computing system is a heterogeneous accelerated computing system, and the accelerated computing task is a heterogeneous accelerated computing task.

13. A device virtualization method, wherein the method is applied to an accelerated computing system, the accelerated computing system comprises a host end and a device end connected to the host end, and the method comprises:
transmitting, by the device end, an accelerated computing task to the host end by using a queue of a virtual function presented by the device end on the host end, wherein the accelerated computing task is performed by an accelerator that corresponds to the accelerated computing task and that is in the device end, the queue is virtually presented by the device end to the host end, and the accelerated computing task is stored in a memory in the device end.

14. The method according to claim 13, wherein the accelerated computing system is a heterogeneous accelerated computing system, and the accelerated computing task is a heterogeneous accelerated computing task.

15. A device virtualization method, wherein the method is applied to an accelerated computing system, the accelerated computing system comprises a host end and a device end connected to the host end, and the method comprises:
obtaining, by the host end, an accelerated computing task; and
transmitting, by the host end, the accelerated computing task to the device end by using a queue of a virtual function presented by the device end on the host end, wherein the accelerated computing task is performed by an accelerator that corresponds to the accelerated computing task and that is in the device end, the queue is virtually presented by the device end to the host end, and the accelerated computing task is stored in a memory in the device end.

16. The method according to claim 15, wherein the accelerated computing system is a heterogeneous accelerated computing system, and the accelerated computing task is a heterogeneous accelerated computing task.

17. A device end, comprising a processor, wherein the processor is coupled to a memory, the memory is configured to store a program or instructions, and when the program or the instructions are performed by the processor, the device end is enabled to perform the method according to any one of claims 1 to 6.

18. A host end, comprising a processor, wherein the processor is coupled to a memory, the memory is configured to store a program or instructions, and when the program or the instructions are performed by the processor, the host end is enabled to perform the method according to any one of claims 7 to 12.

19. A device end, comprising a hardware scheduling apparatus, wherein the hardware scheduling apparatus is coupled to a memory, the memory is configured to map a queue of a virtual function, and the hardware scheduling apparatus is configured to schedule the queue, to enable the device end to perform the method according to claim 13 or 14.

20. A host end, comprising a processor, wherein the processor is coupled to a memory, the memory is configured to store a program or instructions, and when the program or the instructions are performed by the processor, the host end is enabled to perform the method according to claim 15 or 16.

21. An accelerated computing system, comprising the device end according to claim 17 and the host end according to claim 18, or comprising the device end according to claim 19 and the host end according to claim 20.

22. A computer storage medium, comprising computer instructions, wherein when the computer instructions are run on a terminal device, the terminal device is enabled to perform the method according to any one of claims 1 to 16.

23. A computer program product, wherein when the computer program product is run on a computer, the computer is enabled to perform the method according to any one of claims 1 to 16.
